# EUROPÄISCHE PATENTANMELDUNG

(11) **EP 0 950 978 A1**
(43) Veröffentlichungstag der Anmeldung: **20.10.1999**
(21) Anmeldenummer: 99107266.1
(22) Anmeldetag: 14.04.1999
(51) Int. Cl.: G06K 9/22, G06F 3/033

(54) **Pen-Computer und Betriebsverfahren für einen in einen Lernmodus geschalteten Pen-Computer**

(30) Priorität: 16.04.1998 DE 19816731
(71) Anmelder: Stephan, Egon Prof.Dr., 51427 Bergisch-Gladbach (DE)
(72) Erfinder: Stephan, Egon Prof.Dr., 51427 Bergisch-Gladbach (DE)
(74) Vertreter: von Kirschbaum, Albrecht, Dipl.-Ing.

(57) **Zusammenfassung**

Bei dem ein integriertes Textverarbeitungsprogramm enthaltenden erfindungsgemäßen Pen-Computer mit einem Sensor-Bildschirm, der sowohl als Anzeigefeld als auch zur mittels eines Stiftes (Pen) vorzunehmenden handschriftlichen Eingabe von mit einer Zeichenerkennungssoftware zu interpretierendem Text dient, soll der handschriftlich eingegebene Text ein Kurzschrift-Text oder ein hierzu ähnliches sprachliches Kurzsystem sein, wobei die Zeichenerkennungssoftware zur Interpretation der Kurzschriftzeichen des jeweils benutzten Kurzschriftsystems ausgelegt ist. Es wird auch ein vorteilhaftes Betriebsverfahren für einen in einen Lernmodus geschalteten Pen-Computer angegeben. Anwendung findet die Erfindung bei Palmtop- oder Handheld-Computern, die mit einem Stift als Eingabegerät arbeiten.

## Beschreibung

Die Erfindung betrifft einen ein integriertes Textprogramm enthaltenden Pen-Computer mit Bildschirm, wobei mittels eines Stiftes (Pen) auf einem Sensorfeld vorzunehmende handschriftliche Kurzschrift-Texteingaben mittels einer zur Interpretation der Kurzschriftzeichen des jeweils benutzten Kurzschriftsystems ausgelegten Zeichenerkennungssoftware interpretiert und auf dem Bildschirm in Form entsprechender lesbarer Zeichen angezeigt werden.

Die Erfindung betrifft außerdem ein Betriebsverfahren für einen solchen in einen Lernmodus geschalteten Pen-Computer.

Pen-Computer werden nicht über eine Tastatur oder über eine Maus, sondern über einen Stift (Pen) bedient. Fast die gesamte obere Fläche eines derartigen Computers dient einerseits als Anzeigefeld (LCD-Anzeige) und andererseits zur Eingabe. Dazu kann auf der berührungssensitiven Oberfläche mit dem Stift geschrieben werden. Darüber hinaus kann mit dem Stift auf Elemente der Anzeige gezeigt werden. Zusätzlich stehen gewöhnlich Befehlskürzel zur Verfügung und ein Bildausschnitt kann z.B. durch Einkreisen markiert werden.

Damit ein handgeschriebener Text korrekt interpretiert werden kann, verfügt der Pen-Computer über eine Zeichenerkennungssoftware und läßt sich auf die Schreibweise des Benutzers hin trainieren. Vorteile von Pen-Computern sind die Mobilität, die einfache Eingabe und intuitive Bedienung sowie die universelle Einsetzbarkeit. Verschiedene Pen-Computer sind beispielsweise in dem Aufsatz von H. Peller, N. Ernst: "Her mit den kleinen Helfern. Organizer" in der Zeitschrift "Computer&Co, Magazin für Computer und Kommunikation" 10/96, Oktober 1996, Seiten 18 bis 20 beschrieben.

Eine Schwierigkeit bei Pen-Computern besteht in einer effektiven Handschriftenerkennung. Seit Jahren werden die Möglichkeiten der handschriftlichen Eingabe von Notizen auf Pen-Computern weiterentwickelt. Grundsätzlich sind hierbei verschiedene Aspekte zu beachten, um für die über Software durchgeführte Erkennung der handschriftlichen Notizen günstige Voraussetzungen zu schaffen. Dies bedeutet, daß bestimmte Zeichen in einer besonderen Weise, z.B. in Druckbuchstabenschrift, geschrieben werden müssen.

Aus GB 2 087 616 A ist ein insbesondere für die Arbeit mit tauben Menschen vorteilhaftes Gerät zum Erzeugen einer lesbaren Darstellung einer geschriebenen Kurzschrift-Texteingabe bekannt. Bei diesem Gerät sind ein graphisches Eingabegerät zur Bildung von für die Position eines Stiftes auf einer Eingabeoberfläche repräsentativen Signalen, Zeichenanalysemittel zum Analysieren dieser Signale aufgrund von vorgegebenen Regeln und ein Anzeigemittel zur Anzeige von lesbaren Zeichen vorgesehen, die durch das Zeichenanalysemittel erkannt worden sind.

Der Erfindung liegt vor allem die Aufgabe zugrunde, Pen-Computern ein neues Anwendungsgebiet zuzuweisen, für das sie ihrer Art nach bestens geeignet sind, und sie für dieses neue Anwendungsgebiet technisch anzupassen. Darüber hinaus soll ein Betriebsverfahren für auf diesem neuen Anwendungsgebiet arbeitende und daran angepaßte Pen-Computer geschaffen werden.

Gemäß der Erfindung, die sich auf einen Pen-Computer der eingangs beschriebenen Art bezieht, wird die gestellte Aufgabe dadurch gelöst, daß der Bildschirm ein Sensor-Bildschirm ist, der über seine Funktion als Anzeigefeld hinaus auch als Sensorfeld zu einer mittels des Stiftes vorzunehmenden Kurzschrift-Texteingabe vorgesehen ist und daß für einen einschaltbaren Lernmodus der Bildschirm in zwei Bereiche aufgeteilt ist, von denen der eine Bereich für eine handschriftliche Zeicheneingabe des Kurzschrifttextes und der andere Bereich für eine Anzeige zur Vorgabe und/oder für eine Textanzeige von Zeichen und Zeichenfolgen in Kurzschrift und/oder in Langschrift vorgesehen ist.

Im Zusammenhang mit der Verwendung von Kurzschrift heutzutage ist ganz allgemein anzumerken, daß zwar die direkte Spracherkennung des gesprochenen Worts mittels Computer erhebliche Fortschritte gemacht hat, daß aber z.B. in vielen sozialen Situationen nur die Anfertigung handschriftlicher Notizen in Betracht kommt. Ein Diktieren solcher Notizen ist z.B. in einer Konferenz oder bei Vorträgen nicht möglich. Ähnliches gilt beispielsweise für das Mitschreiben in Vorlesungen an Universitäten oder in Schulen.

Grundsätzlich stellt die Kurzschrift, beispielsweise die in Deutschland entwickelte Stenoschrift oder Eilschrift, ein durchdachtes System der sprachlichen Analyse zur Verfügung, das für die handschriftliche Eingabe in den Pen-Computer eine Reihe von Vorzügen hat. Die Kurzschrift mit ihren Schriftsymbolen bzw. Silben- und Wortsymbolen ist insgesamt in der Variation erheblich geringer als die Langschrift mit mindestens 26 Buchstaben und den unterschiedlichen Verbindungen.

Dies bedeutet eine beträchtliche Reduzierung der in Betracht kommenden Schriftzüge, wodurch dem Computer bedeutend weniger Leistung abverlangt wird. Darüber hinaus ist davon auszugehen, daß die Kurzschrift im Regelfall für den Computer nicht nur besser erkennbar und lesbar ist, sondern auch viel schneller zu schreiben ist als die normale Langschrift, da es sich um Abkürzungen handelt. Die Kurzschrift ist auch besser lesbar, weil es sich hierbei um eine stark standardisierte Handschrift handelt, da die Ausführung der einzelnen Symbole exakter festgelegt ist als bei der normalen Schreibschrift.

Der Pen-Computer nach der Erfindung kann in vorteilhafter Weise durch eine Trainierbarkeit der Zeichenerkennung im Hinblick auf die spezielle Kurzschrift-Schreibweise des Benutzers weitergebildet werden.

Der für eine handschriftliche Zeicheneingabe vorgesehene Bereich des Bildschirms läßt sich in vorteilhafter Weise mit Hilfslinien für eine Kurzschrifteingabe versehen. Dabei können die Hilfslinien auf dem Bildschirm unter Zuhilfenahme einer Software eingeblendet werden, oder man kann zur Erzeugung der Hilfslinien auf dem Bildschirm eine mit entsprechenden Linien versehene, transparente Folie vorsehen.

Der Pen-Computer kann in vorteilhafter Weise nach Art eines sogenannten Handheld-Rechners, eines so bezeichneten Palmtop-Rechners oder eines Eingabetabletts bei einem stationären oder portablen Rechner ausgeführt werden.

Im folgenden wird ein Betriebsverfahren des für Kurzschrift ausgelegten Pen-Computers nach der Erfindung im erwähnten Lernmodus ausgeführt. Ein Vorteil des Pen-Computers nach der Erfindung ist nämlich darin zu sehen, daß das Erlernen der Kurzschrift oder eines anderen sprachlichen Kurzsystems mit dem entsprechend der Erfindung eingerichteten Pen-Computer viel schneller und effizienter abläuft als das Erlernen mit Papier und Bleistift. Training von Schreiber und Computer laufen hierbei zeitweise parallel.

Ein Betriebsverfahren für einen in den erwähnten Lernmodus geschalteten Pen-Computer besteht darin, daß im Rahmen eines ersten Lernfortschritts ein Kurzschriftzeichen zunächst in dem zur Anzeige von Zeichen vorgesehenen Bereich des Bildschirms vorgegeben wird, daß das vorgegebene Zeichen im für eine handschriftliche Eingabe vorgesehenen Bereich des Bildschirms durch einen Benutzer nachgezeichnet wird, und daß nach korrektem Lesen und Erkennen dieses Zeichens durch die Zeichenerkennungssoftware ein nächstes Kurzschriftzeichen in dem zur Anzeige von Zeichen vorgesehenen Bereich des Bildschirms vorgegeben wird.

Nach Abschluß des ersten Lernfortschritts wird im Rahmen eines zweiten Lernfortschritts in dem zur Anzeige von Zeichen vorgesehenen Bereich des Bildschirms ein aus mehreren Zeichen bestehendes Wort in Langschrift vorgegeben, wobei dieses in Langschrift angegebene Wort vom Benutzer in entsprechender Kurzschrift im für eine handschriftliche Eingabe vorgesehenen Bereich des Bildschirms handschriftlich eingegeben wird.

Durch die Zeichenerkennungssoftware wird eine im zur Anzeige von Zeichen vorgesehenen Bereich des Bildschirms zur Darstellung gebrachte Rückmeldung dahingehend ausgelöst, inwieweit die eingegebenen Kurzschriftzeichen korrekt bzw. nicht korrekt sind. Bei vom Benutzer nicht hinreichend korrekt eingegebenen Kurzschriftzeichen werden diejenigen Schriftzuganteile, die verbesserungsbedürftig sind, durch die Zeichenerkennungssoftware auf dem Bildschirm erkennbar z.B. durch besondere Textmerkmale wie Fettschreibweise, andere Farbgebung, Unterstreichen oder dergleichen verbessert dargestellt.

Das Betriebsverfahren des Pen-Computers nach der Erfindung im Lernmodus zeichnet sich darüber hinaus dadurch aus, daß im Rahmen eines weiteren Lernfortschritts in dem für eine handschriftliche Eingabe vorgesehenen Bereich des Bildschirms handschriftlich vom Benutzer ein Kurzschrifttext ohne rechnerseitige Vorgabe eingegeben wird, daß der von der Zeichenerkennungssoftware erkannte oder auch falsch erkannte Text sofort in Langschrift in dem für eine Anzeige vorgesehenen Bereich des Bildschirms dargestellt wird.

In vorteilhafter Weise werden für diejenigen Wörter oder Silben, welche die Zeichenerkennungssoftware als vom Benutzer falsch eingegeben erkannt hat, nach Anklicken von seiten des Benutzers mit dem Stift an der entsprechenden Bildschirmstelle daraufhin im für die Anzeige vorgesehenen Bereich des Bildschirms Zeichen vorgegeben, die alternativ in Betracht kommen, so daß der Benutzer in die Lage versetzt wird, das korrekte Zeichen exakt abzuzeichnen.

Angesichts der aufgrund der Erfindung mit Hilfe von Software zu realisierenden, optimalen Lernmöglichkeiten ist es auch realistisch, daß ohne Schule und ohne Lehrpersonal der einzelne Lernende zügig und erfolgreich mit einem entsprechend der Erfindung ausgelegten Pen-Computer im Lernmodus-Betrieb das Schreiben von Kurzschrift erlernt.

In diesem Zusammenhang ist darauf hinzuweisen, daß unter dem Begriff "Kurzschrift" ganz allgemein sprachliche Kurzsysteme zu verstehen sind, also beispielsweise die für verschiedene Sprachbereiche bestehenden Stenographien (z.B. Gerichtsstenographie, deutsche Kurzschrift, deutsche Eilschrift, englische Kurzschrift) bzw. entsprechende Apparate, die analog zur Kurzschrift zu verstehen sind.

## Patentansprüche

1. Ein integriertes Textverarbeitungsprogramm enthaltender Pen-Computer mit einem Bildschirm, wobei mittels eines Stiftes (Pen) auf einem Sensorfeld vorzunehmende handschriftliche Kurzschrift-Texteingaben mittels einer zur Interpretation der Kurzschriftzeichen des jeweils benutzten Kurzschriftsystems ausgelegten Zeichenerkennungssoftware interpretiert und auf dem Bildschirm in Form entsprechender lesbarer Zeichen angezeigt werden, **dadurch gekennzeichnet,** daß
der Bildschirm ein Sensor-Bildschirm ist, der über seine Funktion als Anzeigefeld hinaus auch als Sensorfeld zu einer mittels des Stiftes vorzunehmenden Kurzschrift-Texteingabe vorgesehen ist und
für einen einschaltbaren Lernmodus der Bildschirm in zwei Bereiche aufgeteilt ist, von denen der eine Bereich für eine handschriftliche Zeicheneingabe des Kurzschrifttextes und der andere Bereich für eine Anzeige zur Vorgabe und/oder für eine Textanzeige von Zeichen und Zeichenfolgen in Kurzschrift und/oder in Langschrift vorgesehen ist.

2. Pen-Computer oder Eingabetablett in Verbindung mit einem Computer nach Anspruch 1, **gekennzeichnet** durch eine Trainierbarkeit der Zeichenerkennung im Hinblick auf die spezielle Kurzschrift-Schreibweise des Benutzers.

3. Pen-Computer oder Eingabetablett in Verbindung mit einem Computer nach Anspruch 1, **dadurch gekennzeichnet**, daß der für eine handschriftliche Zeicheneingabe vorgesehene Bereich des Bildschirms mit Hilfslinien für eine Kurzschrifteingabe versehen ist.

4. Pen-Computer oder Eingabetablett in Verbindung mit einem Computer nach Anspruch 3, **dadurch gekennzeichnet**, daß die Hilfslinien auf dem Bildschirm unter Zuhilfenahme einer Software eingeblendet sind.

5. Pen-Computer oder Eingabetablett in Verbindung mit einem Computer nach Anspruch 3, **dadurch gekennzeichnet**, daß zur Erzeugung der Hilfslinien auf dem Bildschirm eine mit entsprechenden Linien versehene, transparente Folie angeordnet ist.

6. Pen-Computer oder Eingabetablett in Verbindung mit einem Computer nach einem der vorhergehenden Ansprüche, **gekennzeichnet** durch eine Ausführung nach Art eines Handheld-Rechners.

7. Pen-Computer oder Eingabetablett in Verbindung mit einem Computer nach einem der Ansprüche 1 bis 5, **gekennzeichnet** durch eine Ausführung nach Art eines Palmtop-Rechners.

8. Betriebsverfahren für einen in den Lernmodus geschalteten Pen-Computer oder Eingabetablett in Verbindung mit einem Computer nach einem der Ansprüche 1 bis 7, **dadurch gekennzeichnet**, daß im Rahmen eines ersten Lernfortschritts ein Kurzschriftzeichen zunächst in dem zur Anzeige von Zeichen vorgesehenen Bereich des Bildschirms vorgegeben wird, daß das vorgegebene Zeichen im für eine handschriftliche Eingabe vorgesehenen Bereich des Bildschirms durch einen Benutzer nachgezeichnet wird, und daß nach korrektem Lesen und Erkennen dieses Zeichens durch die Zeichenerkennungssoftware ein nächstes Kurzschriftzeichen in dem zur Anzeige von Zeichen vorgesehenen Bereich des Bildschirms vorgegeben wird.

9. Betriebsverfahren nach Anspruch 8, **dadurch gekennzeichnet**, daß nach Abschluß des ersten Lernfortschritts im Rahmen eines zweiten Lernfortschritts in dem zur Anzeige von Zeichen vorgesehenen Bereich des Bildschirms ein aus mehreren Zeichen bestehendes Wort in Langschrift vorgegeben wird, daß dieses in Langschrift angegebene Wort vom Benutzer in entsprechender Kurzschrift im für eine handschriftliche Eingabe vorgesehenen Bereich des Bildschirms handschriftlich eingegeben wird, und daß durch die Zeichenerkennungssoftware eine im zur Anzeige von Zeichen vorgesehenen Bereich des Bildschirms zur Darstellung gebrachte Rückmeldung dahingehend ausgelöst wird, inwieweit die eingegebenen Kurzschriftzeichen korrekt bzw. nicht korrekt sind.

10. Betriebsverfahren nach Anspruch 9, **dadurch gekennzeichnet**, daß bei vom Benutzer nicht hinreichend korrekt eingegebenen Kurzschriftzeichen diejenigen Schriftzuganteile, die verbesserungsbedürftig sind, durch die Zeichenerkennungssoftware auf dem Bildschirm erkennbar z.B. durch besondere Textmerkmale wie Fettschreibweise, andere Farbgebung, Unterstreichen oder dergleichen verbessert dargestellt werden.

11. Betriebsverfahren nach einem der Ansprüche 8 bis 10, **dadurch gekennzeichnet**, daß im Rahmen eines weiteren Lernfortschritts in dem für eine handschriftliche Eingabe vorgesehenen Bereich des Bildschirms handschriftlich vom Benutzer ein Kurzschrifttext ohne rechnerseitige Vorgabe eingegeben wird, daß der von der Zeichenerkennungssoftware erkannte oder auch falsch erkannte Text sofort in Langschrift in dem für eine Anzeige vorgesehenen Bereich des Bildschirms dargestellt wird.

12. Betriebsverfahren nach Anspruch 11, **dadurch gekennzeichnet**, daß für diejenigen Wörter oder Silben, welche die Zeichenerkennungssoftware als vom Benutzer falsch eingegeben erkannt hat, nach Anklicken von seiten des Benutzers mit dem Stift an der entsprechenden Bildschirmstelle daraufhin im für die Anzeige vorgesehenen Bereich des Bildschirms Zeichen vorgegeben werden, die alternativ in Betracht kommen, so daß der Benutzer in die Lage versetzt wird, das korrekte Zeichen exakt abzuzeichnen.
